# EUROPÄISCHE PATENTSCHRIFT

(11) **EP 2 096 733 B1**
(45) Veröffentlichungstag und Bekanntmachung des Hinweises auf die Patenterteilung: **25.12.2013**
(21) Anmeldenummer: 08003615.5
(22) Anmeldetag: 28.02.2008
(51) Int. Cl.: H02J 7/00

(54) **Verfahren zum Abschalten eines akkubetriebenen Elecktrohandwerkzeuggeräts sowie Elektrohandwerkzeuggerät**
Method for dis-engaging a battery-operated electric hand tool and electric hand tool
Procédé de disjonction d'une machine-outil portative électrique à pile et machine-outil portative

(43) Veröffentlichungstag der Anmeldung: 02.09.2009
(73) Patentinhaber: Metabowerke GmbH, 72622 Nürtingen (DE)
(72) Erfinder: Gräber, Jochen, 73266 Bissingen (DE)
(74) Vertreter: Raunecker, Klaus Peter

(56) Entgegenhaltungen:
- EP-A- 1 571 458
- EP-A- 1 788 687
- US-A1- 2003 096 158

## Beschreibung

Die Erfindung betrifft ein Verfahren zum Abschalten eines akkubetriebenen Elektrohandwerkzeuggeräts mit den Merkmalen des Oberbegriffs des Anspruchs 1 sowie ein Elektrohandwerkzeuggerät mit den Merkmalen des Oberbegriffs des Anspruchs 2. Unter dem Begriff Elektrohandwerkzeuggerät soll vorliegend auch eine elektrische akkubetriebene (Montage)leuchte subsumiert werden.

Moderne akkubetriebene Elektrohandwerkzeuggeräte sind bekannterweise so ausgebildet, dass sie einen manuell und werkzeuglos mit einem Gehäusekörper des Elektrohandwerkzeuggeräts verbindbaren Akkupack oder Akku umfassen, in welchem die Akkuzellen angeordnet sind. Es sind Akkus mit unterschiedlichen Typen von Akkuzellen bekannt und üblich. Beispielsweise sind umfangreich verbreitet Nickel-Cadmium-Akkuzellen. In neuerer Zeit haben aber auch sogenannte Lithium-Ionen-Akkuzellen Verwendung gefunden, die eine hohe Nennspannung von 3,6 V und eine hohe Energiedichte aufweisen. Allerdings ist der Lithium-Ionen-Akku sehr beschädigungsanfällig bei einer Tiefentladung, wenn der Akku also in einen an sich unzulässigen Unterspannungsbereich gelangt. Daher müssen bei Verwendung eines Lithium-Ionen-Akkus im Zusammenhang mit Elektrohandwerkzeuggeräten geeignete Maßnahmen vorgesehen werden, die eine Unterspannungsversorgung, das heißt, eine Tiefentladung der Akkuzellen vermeiden. Es wird daher bereits unter Verwendung einer elektronischen Steuervorrichtung der Ladezustand der Akkuzellen des Akkus überwacht, so dass eine bevorstehende Unterspannungsversorgung rechtzeitig detektiert werden kann, um dann sofort und rechtzeitig den weiteren Betrieb des Elektrohandwerkzeuggeräts zu unterbrechen. Dieses ist aus US 2003/0096158 A1 bekannt, bei der ausschließlich im Akku eine Steuervorrichtung vorgesehen ist. Hierfür wird bislang die Energieversorgung des Elektrohandwerkzeuggeräts durch entsprechende Ansteuerung eines Leistungsschalters unterbrochen. Aus EP 1 788 687 A1 ist bekannt, dass dies abrupt erfolgt. Die Maschine gelangt also schlagartig zum Stillstand (sogenannte harte Abschaltung). Dies ist einerseits für den Anwender irritierend, da es das Gefühl eines plötzlichen Defekts der Maschine, beispielsweise eines Durchbrennens des Elektromotors, vermittelt. Außerdem besteht die Gefahr, dass ruckartige Momente auf das Elektrohandwerkzeuggerät übertragen werden können.

Hiervon ausgehend, liegt der vorliegenden Erfindung die Aufgabe zugrunde, ein Verfahren zum Abschalten eines akkubetriebenen Elektrohandwerkzeuggeräts der eingangs beschriebenen Art dahingehend zu verbessern, dass die vorstehenden Nachteile vermieden werden.

Diese Aufgabe wird durch ein erfindungsgemäßes Verfahren mit den Merkmalen des Anspruchs 1 gelöst.

Es wird also durch die elektronische Steuervorrichtung anstelle einer sofortigen Unterbrechung der Leistungsversorgung des Elektrohandwerkzeuggeräts (harte Abschaltung) die Leistungsversorgung des Elektrohandwerkzeuggeräts allmählich bis zum Stillstand der Maschine reduziert. Der Anwender stellt dabei fest, dass das Elektrohandwerkzeuggerät nicht mehr entsprechend der Stellung des manuellen Schalterdrückers wie von ihm intendiert mit Leistung versorgt wird, sondern das Elektrohandwerkzeuggerät wird stattdessen kontinuierlich nach unten geregelt. Dem Anwender wird hierdurch nicht das falsche Gefühl eines plötzlich defekt gegangenen Geräts vermittelt, sondern der Anwender bekommt durch das Verhalten des Geräts einen Hinweis, den er intuitiv richtig zu deuten vermag, nämlich dahingehend, dass der Ladezustand des Akkus einen weiteren Betrieb des Elektrohandwerkzeuggeräts nicht mehr gestattet. Der Anwender wird daraufhin den Akku gegen einen frisch geladenen austauschen, um dann weiterarbeiten zu können.

Auf diese Weise wird auch der Akku besser geschützt, als durch eine harte Abschaltung im letzten Moment. Das beschriebene Verfahren der allmählichen Reduzierung der Leistung wird dann vorzugsweise schon früher eingeleitet, als die vorbekannte harte Abschaltung. Für den Akku bzw. die Akkuzellen ist es dann auch schonender, das heißt, lebensdauererhöhend, wenn ein "verbotener" Unterspannungszustand erst gar nicht erreicht wird bzw. wieder sanft verlassen wird.

Die allmähliche kontinuierliche Reduzierung der Leistung auf Null erfolgt innerhalb von 1 - 10 sec.

Nach einer weiteren vorteilhaften Ausführungsform der Erfindung kann die an den Elektromotor gegebene elektrische Leistung auch derart reduziert werden, dass ein vorgegebener Spannungswert nicht unterschritten wird. Dieser vorgegebene Spannungswert liegt dann vorzugsweise oberhalb eines Grenzwerts für die vorbekannte harte Abschaltung. Der Hintergrund hierfür ist, dass die Spannung eines Akkupacks unter Last niedriger ist als ohne Belastung, was am Innenwiderstand der Akkuzellen begründet liegt. Dies bedeutet aber auch, dass durch eine Reduzierung der Leistungsabgabe an den elektrischen Verbraucher die momentane Spannung des Akkupacks derart stabilisiert werden kann, dass sie einen vorgegebenen Spannungswert nicht unterschreitet. Auf diese erfindungsgemäße Weise wird der Akkupack so lange als möglich in einem noch zulässigen Arbeitsbereich gehalten. Beispielsweise ist es so möglich, dass bei der Ausführung einer besonders leistungsintensiven Arbeit, beispielsweise das Festziehen einer starken Schraubverbindung der momentane Ladungszustand des Akkupacks zur Erzielung der mechanischen Festigkeit nicht ausreichend ist. Der Akku wird dann durch Reduzierung der Leistungsabgabe zunächst oberhalb eines vorgegebenen Spannungswerts gehalten, bis schließlich die genannte Grenzspannung bereits ganz ohne Belastung erreicht ist, also der Motor hierdurch zum Stillstand gebracht wurde. Es ist aber durchaus denkbar, dass ein erneuter Arbeitsvorgang, der eine sehr viel geringere Leistungsabgabe erfordert, beispielsweise das Einschrauben eines kleinen Schräubchens ohne nennenswerten Widerstand, dennoch ausführbar ist. In jedem Fall erhält der Benutzer den Hinweis, dass der Akku gegen einen frisch geladenen ausgetauscht, bzw. neu geladen werden sollte.

Gegenstand der Erfindung ist auch ein akkubetriebenes Elektrohandwerkzeuggerät mit den Merkmalen des Anspruchs 2. Wie bereits erwähnt, erweist sich die Erfindung als besonders vorteilhaft bei einem im Hinblick auf Unterspannungsversorgung beschädigungsanfälligen Lithium-Ionen-Akku.

Weitere Merkmale, Einzelheiten und Vorteile der Erfindung ergeben sich aus den beigefügten Patentansprüchen und aus der zeichnerischen Darstellung und nachfolgenden Beschreibung bevorzugter Ausführungsformen des erfindungsgemäßen akkubetriebenen Elektrohandwerkzeuggeräts. In der Zeichnung zeigt:
- Figur 1: eine schematische Darstellung eines Elektrohandwerkzeuggeräts mit Akku (nicht erfindungsgemäß);
- Figur 2: eine Figur 1 entsprechende schematische Darstellung eines erfindungsgemäßen Elektrohandwerkzeuggeräts mit Akku.

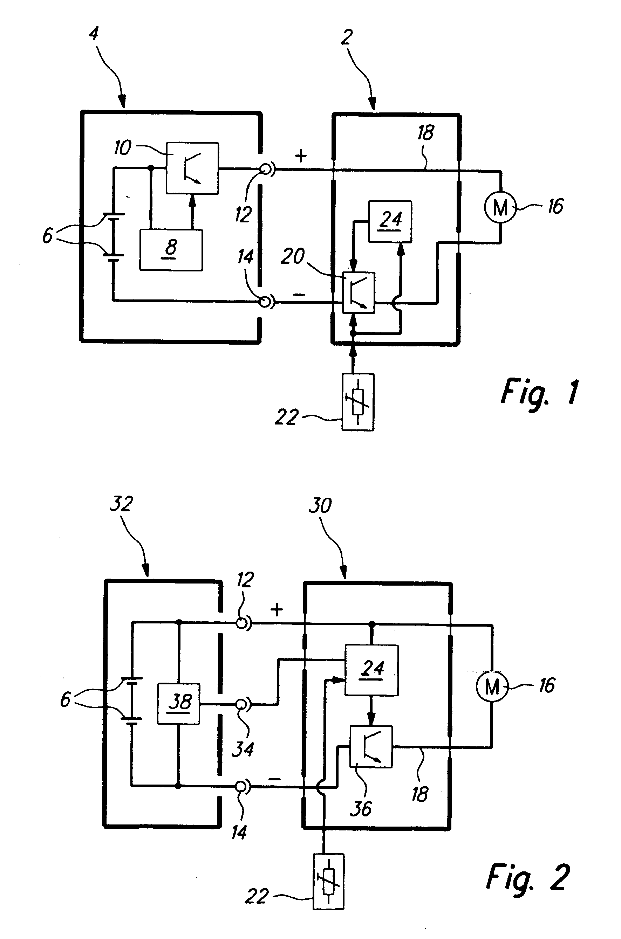

Die Figuren bezeichnen schematisch ein Elektrohandwerkzeuggerät 2 mit einem Akku bzw. Akkupack 4, in dem Akkuzellen 6, insbesondere Lithium-Ionen-Akkuzellen, vorgesehen sind. Nach Figur 1 umfasst der Akku 4 eine elektronische Steuervorrichtung 8, die den Ladezustand der Akkuzellen 6 überwacht. Ferner ist in dem Akku 4 ein elektronischer Leistungsschalter 10, typischerweise auf Basis eines Transistors, vorgesehen, mittels dessen über die Anschlüsse 12, 14 Spannung an das Elektrohandwerkzeuggerät 2 und dessen elektrische Verbraucher gelegt wird. Von dem Elektrohandwerkzeuggerät 2 ist ein Elektromotor 16 dargestellt, wobei in dem elektrischen Leistungskreis 18 des Elektrohandwerkzeuggeräts 2 ein weiterer Leistungsschalter 20 sowie schematisch ein manuell zu betätigender Schalterdrücker 22 angedeutet ist, mittels dessen der Anwender den Leistungsschalter 20 betätigt. Der Schalterdrücker 22 fungiert hier als Sollwertgeber für die elektrische Ansteuerung des Elektromotors 16. Der Schalterdrücker 22 könnte auch über eine elektronische Steuervorrichtung 24 eine entsprechende Ansteuerung des Leistungsschalters 20 bewirken, was in Figur 1 ebenfalls angedeutet ist.

Über die elektronische Steuervorrichtung 8 des Akkus 4 wird der Ladezustand der Akkuzellen 6 überwacht. Wenn eine bevorstehende Unterspannungsversorgung der Akkuzellen 6 festgestellt wird, so wird mittels der elektronischen Steuervorrichtung 8 des Akkus 4 durch Ansteuerung des Leistungsschalters 10 die an den Anschlüssen 12, 14 des Akkus 4 zur Verfügung stehende Spannung bzw. Leistung allmählich innerhalb eines Zeitraums von 1 - 10 sec auf Null reduziert, und zwar ungeachtet der momentanen Stellung des Schalterdrückers 22. Es wäre auch denkbar, dass die Steuervorrichtung 8 den Leistungsschalter 10 derart ansteuert, dass eine vorgegebene Grenzspannung, die noch als zulässig erachtet wird, nicht unterschritten wird. Das heißt, die Steuerung ist dann derart, dass die Leistungsabgabe kontinuierlich reduziert wird, so dass die Grenzspannung nicht unterschritten wird: Auch auf diese Weise wird das Elektrohandwerkzeuggerät schließlich zum Stillstand gebracht. Es sei an dieser Stelle noch erwähnt, dass der Benutzer natürlich auch selbst den Stillstand dadurch bewirken kann, dass er den Schalterdrücker loslässt. Diese Art der Schalterdrückerbetätigung ist natürlich vorgreiflich.

Bei dem Elektrohandwerkzeuggerät 30 mit Akku 32 gemäß Figur 2 ist in dem Akku 32 kein Leistungsschalter vorgesehen, sondern die Akkuzellen 6 sind unmittelbar elektrisch leitend mit den Anschlüssen 12 und 14 des Akkus 32 verbunden, die ihrerseits bei eingestecktem Akku 32 mit den elektrischen Steuerungskomponenten des Elektrohandwerkzeuggeräts 30 verbunden sind. Eine elektronische Steuervorrichtung 24 des Elektrohandwerkzeuggeräts 30 wirkt aber zusätzlich mit einem dritten Anschluss des Akkus 32, einem sogenannten Steueranschluss 34, zusammen. Über diesen Steueranschluss 34 und insbesondere den Anschluss 12 und/oder 14 vermag die elektronische Steuervorrichtung 24 des Elektrohandwerkzeuggeräts 30 den Ladezustand der Akkuzellen 6 des Akkus 32 zu überwachen und in Abhängigkeit davon entsprechende Steuervorgänge auszulösen. Wenn der Ladungszustand der Akkuzellen 6 als hinreichend erachtet wird, so wird durch die elektronische Steuervorrichtung 24 der Leistungsschalter 36 im Leistungskreis 18 des Elektrohandwerkzeuggeräts 30 so angesteuert, dass die elektrische Leistung der Vorgabe des Schalterdrückers 22 als Sollwertgeber entspricht. Wird hingegen eine bevorstehende Unterspannungsversorgung der Akkuzellen 6 festgestellt, so reduziert die elektronische Steuervorrichtung 24 durch entsprechende Ansteuerung des Leistungsschalters 36 die an den Elektromotor 16 gegebene elektrische Leistung allmählich und kontinuierlich auf Null, innerhalb eines Zeitraums von 1 - 10 Sekunden und zwar ungeachtet der momentanen Stellung des Schalterdrückers 22. Der Anwender erhält hierdurch den Hinweis, dass der Akku 32 wieder geladen werden muss, bzw. gegen einen geladenen Akku ausgetauscht werden muss.

Nach Figur 2 ist im Akku 32 eine elektronische Überwachungsvorrichtung 38 vorgesehen, die gewissermaßen einen Teil der Überwachungsfunktion der elektronischen Steuervorrichtung 24 des Elektrohandwerkzeuggeräts 30 ausführt, in dem sie den Ladezustand der Akkuzellen 6 überwacht und bei Feststellung eines bevorstehenden Unterspannungszustands der Akkuzellen 6 über den Steueranschluss 34 ein Alarmsignal an die elektronische Steuervorrichtung 24 des Elektrohandwerkzeuggeräts 30 gibt. In diesem Fall braucht also die elektronische Steuervorrichtung 24 lediglich auf ein Alarmsignal des Akkus 32 "zu warten", um dann die vorbeschriebene Abregelung der elektrischen Leistung allmählich und vorzugsweise kontinuierlich auf Null auszuführen.

## Patentansprüche

1. Verfahren zum Abschalten eines akkubetriebenen Elektrohandwerkzeuggeräts (2), mit einem Akku und mit einer elektronischen Überwachungsvorrichtung (38) im Akku (4), welche den Ladezustand der Akkuzellen 6 überwacht, wobei eine bevorstehende Unterspannungsversorgung detektiert wird und zum Schutz des Akkus (4) Steuerungsmaßnahmen eingeleitet werden, die das Eintreten eines solchen Zustands der Unterspannungsversorgung vermeiden, wobei bei Detektieren einer bevorstehenden Unterspannungsversorgung ungeachtet der Stellung eines manuellen Schalterdrückers (22) die an den Elektromotor (16) gegebene elektrische Leistung reduziert wird, und wobei die elektronische Überwachungsvorrichtung (38) bei Detektieren einer bevorstehenden Unterspannungsversorgung über einen dritten Steueranschluss (34) des Akkus (4) ein Alarmsignal an eine elektronische Steuervorrichtung (24) im Elektrohandwerkzeuggerät (2) gibt, wo dieses Alarmsignal als solches erkannt wird, **dadurch gekennzeichnet, dass** daraufhin über die elektronische Steuervorrichtung (24) im Elektrohandwerkzeuggerät (2) die an den Elektromotor gegebene elektrische Leistung allmählich und kontinuierlich während einer Zeitdauer von 1-10 sec auf Null bis zum Stillstand des Elektromotors reduziert wird.

2. Akkubetriebenes Elektrohandwerkzeuggerät (2) mit einer elektronischen Steuervorrichtung (24) im Elektrohandwerkzeuggerät (2) und einer elektronischen Überwachungsvorrichtung (38) im Akku (4), welche den Ladezustand der Akkuzellen (6) überwacht, wobei eine bevorstehende Unterspannungsversorgung detektiert wird und zum Schutz des Akkus (4) Steuerungsmaßnahmen eingeleitet werden, die das Eintreten eines solchen Zustands der Unterspannungsversorgung vermeiden, und wobei die elektronische Überwachungsvorrichtung (38) bei Detektieren einer bevorstehenden Unterspannungsversorgung zur Ausgabe eines Alarmsignals über einen dritten Steueranschluss (34) des Akkus (4) an die elektronische Steuervorrichtung (24) im Elektrohandwerkzeuggerät (2) ausgebildet ist **dadurch gekennzeichnet, dass** die elektronische Steuervorrichtung (24) im Elektrohandwerkzeuggerät (2) ungeachtet der Stellung eines manuellen Schalterdrückers (22) daraufhin die an den Elektromotor gegebene elektrische Leistung allmählich und kontinuierlich während einer Zeitdauer von 1-10 sec auf Null bis zum Stillstand des Elektromotors reduziert.

3. Elektrohandwerkzeuggerät nach Anspruch 2, **gekennzeichnet durch** einen Lithium-Ionen Akku.

## Claims

1. Method for switching off a battery-operated electric hand tool (2), having a battery and an electronic monitoring device (38) in the battery (4) which monitors the charge state of the battery cells 6, wherein an imminent low-voltage supply is detected and control measures for protection of the battery (4) are initiated which avoid the occurrence of such a state of the low-voltage supply, wherein the electric power supplied to the electric motor (16) is reduced, on detection of an imminent low-voltage supply, irrespective of the position of a manual switch push-button (22), and wherein the electronic monitoring device (38), on detection of an imminent low-voltage supply, transmits an alarm signal via a third control terminal (34) of the battery (4) to an electronic control device (24) in the electric hand tool (2), where this alarm signal is recognised as such, **characterised in that** thereupon, via the electronic control device (24) in the electric hand tool (2), the electric power supplied to the electric motor is gradually and continuously reduced to zero over a period of 1-10 sec until the electric motor stops.

2. Battery-operated electric hand tool (2) having an electronic control device (24) in the electric hand tool (2) and an electronic monitoring device (38) in the battery (4) which monitors the charge state of the battery cells (6), wherein an imminent low-voltage supply is detected and control measures for protection of the battery (4) are initiated which avoid the occurrence of such a state of the low-voltage supply, and wherein the electronic monitoring device (38), on detection of an imminent low-voltage supply, is designed to output an alarm signal via a third control terminal (34) of the battery (4) to the electronic control device (24) in the electric hand tool (2), **characterised in that** the electronic control device (24) in the electric hand tool (2), irrespective of the position of a manual switch push-button (22), thereupon reduces the electric power supplied to the electric motor gradually and continuously to zero over a period of 1-10 sec until the electric motor stops.

3. Electric hand tool according to Claim 2, **characterised by** a lithium-ion battery.

## Revendications

1. Procédé pour déconnecter un appareil électro-portable (2) entraîné au moyen d'une batterie, comportant une batterie et un équipement de surveillance électronique (38) logé dans la batterie (4), qui contrôle l'état de charge des cellules (6) de la batterie, dans lequel une alimentation en sous-tension antérieure est détectée, et, en vue de protéger la batterie (4), des mesures de commande sont engagées, qui sont destinées à éviter l'entrée dans une telle situation d'alimentation en sous-tension, dans lequel, lors de la détection d'une alimentation en sous-tension précédente, la puissance d'alimentation fournie au moteur électrique (16) est réduite, indépendamment de la position d'un bouton de commande manuel (22), et dans lequel, l'équipement de surveillance électronique (38), lors de la détection d'une autre alimentation précédente en sous-tension, à travers une troisième connexion de commande (34) de la batterie (4), transmet un signal d'alarme vers une installation électronique de commande (24) disposée dans l'appareil électro-potable (2), ce signal d'alarme étant reconnu comme tel, **caractérisé en ce que**, suite à cela, à travers l'installatîon électronique de commande (24), dans l'appareil électro-portable (2), la puissance électrique fournie au moteur électrique est inexorablement et continûment réduite à zéro sur une durée de 1-10 secondes, jusqu'à l'arrêt complet du moteur électrique.

2. Appareil électro-portable (2) entraîné au moyen d'une batterie, pourvu d'une inatallation électronique de commande (24) montée dans l'appareil électro-portable (2) et d'un équipement de surveillance électronique (38) disposé dans la batterie (4), destiné à surveiller l'état de charge des cellules (6) de la batterie, dans lequel une alimentation en sous-tension antérieure est détectée, et pour protéger la batterie (4), des mesures de commande sont engagées, afin d'éviter un tel état d'alimentation en sous-tension, et dans lequel, l'équipement de surveillance électronique (38) est agencé pour, en détectant une alimentation antérieure en sous-tension, à travers une troisième connexion de commande (34) de la batterie (4), transmettre un signal d'alarme vers une instillation électronique de commande (24) disposée dans l'appareil électro-portable (2), **caractérisé en ce que**, l'installation électronique de commande (24) dans l'appareil électro-portable (2), indépendamment de la position d'un bouton de commande manuel (22), réduit inexorablement et continûment la puissance électrique fournie au moteur électrique jusqu'à zéro sur une durée de 1-10 secondes, jusqu'à l'arrêt complet du moteur.

3. Appareil électro-portable selon la revendication 2, **caractérisée par** une batterie aux ions de lithium.
